# EUROPÄISCHE PATENTSCHRIFT

(11) **EP 1 279 552 B1**
(45) Veröffentlichungstag und Bekanntmachung des Hinweises auf die Patenterteilung: **31.05.2006**
(21) Anmeldenummer: 02015894.5
(22) Anmeldetag: 17.07.2002
(51) Int. Cl.: B60N 2/20

(54) **Verriegelungsvorrichtung für einen Fahrzeugsitz**
Locking device for a vehicle seat
Dispositif de verrouillage pour un siège de véhicule

(30) Priorität: 20.07.2001 DE 10135627
(43) Veröffentlichungstag der Anmeldung: 29.01.2003
(73) Patentinhaber: KEIPER GmbH & Co. KG, 67657 Kaiserslautern (DE)
(72) Erfinder: Nock, Eckhard, 67551 Worms (DE); Kraus, Martin, 67806 Katzenbach (DE); Hänsel, Richard, 55237 Flonheim (DE); Klein, Mario, 67663 Kaiserslautern (DE)
(74) Vertreter: Patentanwälte Hosenthien-Held und Dr. Held

(56) Entgegenhaltungen:
- EP-A- 1 083 083
- DE-A- 4 439 644
- DE-C- 4 312 732
- US-A- 5 433 507

## Beschreibung

Die Erfindung betrifft eine Verriegelungsvorrichtung für einen Fahrzeugsitz, insbesondere in einem Einsteller eines Kraftfahrzeugsitzes, mit den Merkmalen des Oberbegriffs des Anspruches 1.

Aus der DE 44 39 644 C2 ist eine Verriegelungsvorrichtung dieser Art zur Verrieglung eines Beschlags eines Fahrzeugsitzes mit freischwenkbarer Rückenlehne bekannt, welche ein federbelastetes Spannelement zum Spannen einer Sperrklinke und ein Fangelement zum Abstützen der Sperrklinke im Crashfall aufweist, wobei das Spannelement und das Fangelement einstückig oder zweistückig mit einer Schlitz-Zapfen-Führung als Kopplung ausgebildet sind. In der Praxis bleiben, beispielsweise hinsichtlich des Bauraumbedarfs und der Herstellungskosten, noch Wünsche fen.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, daß in wenigstens einem ersten der Sicherungselemente eine Aufnahme vorgesehen ist, welche ein erstes der beiden Federmittel vollständig aufnimmt, beansprucht das erste Federmittel keinen Bauraum außerhalb des Sicherungselementes mehr, so daß der insgesamt bestehende Bauraumbedarf, insbesondere in axialer Richtung bezüglich der Schwenkachse (y-Richtung), reduziert wird. Dies ist insbesondere bei flach ausgebildeten, auf dem gleichen Lagerbolzen gelagerten Sicherungselementen vorteilhaft, da dann die axiale Länge der Verriegelungsvorrichtung, gegebenenfalls auch diejenige des gesamten Einstellers, reduziert wird, beispielsweise im Vergleich zu einer Verwendung von Spiralfedern, die axial benachbart zu den Sicherungselementen angeordnet sind. Vorzugsweise wirkt das erste Federmittel zwischen den beiden vorzugsweise benachbart angeordneten Sicherungselementen, so daß nur eines der Sicherungselemente beispielsweise durch eine in axialer Richtung Bauraum beanspruchende Spiralfeder beaufschlagt werden muß. Eine günstigere radiale Verteilung des beanspruchten Bauraums ergibt sich, wenn die Aufnahme und die auf die Verriegelungselemente wirkenden Flächen der Sicherungselemente auf verschiedenen radialen Seiten bezüglich des Lagerbolzens angeordnet sind.

Die Ausbildung des ersten Federmittels als Schraubenfeder hat den Vorteil, daß nur sehr geringe Herstellungskosten anfallen, beispielsweise im Vergleich zu einer Spiralfeder, und der benötigte Bauraum nur sehr gering ist, so daß der für die Aufnahme vorgesehene Bereich klein gehalten werden kann und damit Gewicht und Materialkosten gespart werden.

Die Ausbildung des zweiten Federmittels als Spiralfeder mit quadratischem Querschnitt hat bei gleicher Masse gegenüber einer Flachspiralfeder mit rechteckigem, in axialer Richtung des Lagerbolzens des zugehörigen Sicherungselementes, also in y-Richtung, breiterem und ansonsten flacherem Querschnitt den Vorteil, daß das Federmoment erhöht ist, und gegenüber einer Flachspiralfeder mit rundem Querschnitt den Vorteil, daß beim Zuziehen ein seitliches Ausweichen in y-Richtung verhindert wird. Insgesamt wird dadurch der Bauraumbedarf in y-Richtung verringert.

Die erfindungsgemäße Verriegelungsvorrichtung mit der entsprechend ausgebildeten Sicherungsvorrichtung kann für verschiedene Einsteller eingesetzt werden, also sowohl für Dreheinsteller, wie beispielsweise Beschläge von Fahrzeugsitzen mit neigungsveränderlicher und/oder freischwenkbarer Rückenlehne, als auch für Lineareinsteller, wie beispielsweise Längseinsteller oder Höheneinsteller in Diagonalstreben. Die erfindungsgemäße Verriegelungsvorrichtung kann auch für die Verriegelung verschiedener Stellungen eines faltbaren Fahrzeugsitzes verwendet werden. Je nach Anwendungsfall unterscheiden sich dann die zu sichernden Verriegelungselemente in ihrem Aufbau, während die Sicherungselemente prinzipiell im wesentlichen gleich bleiben.

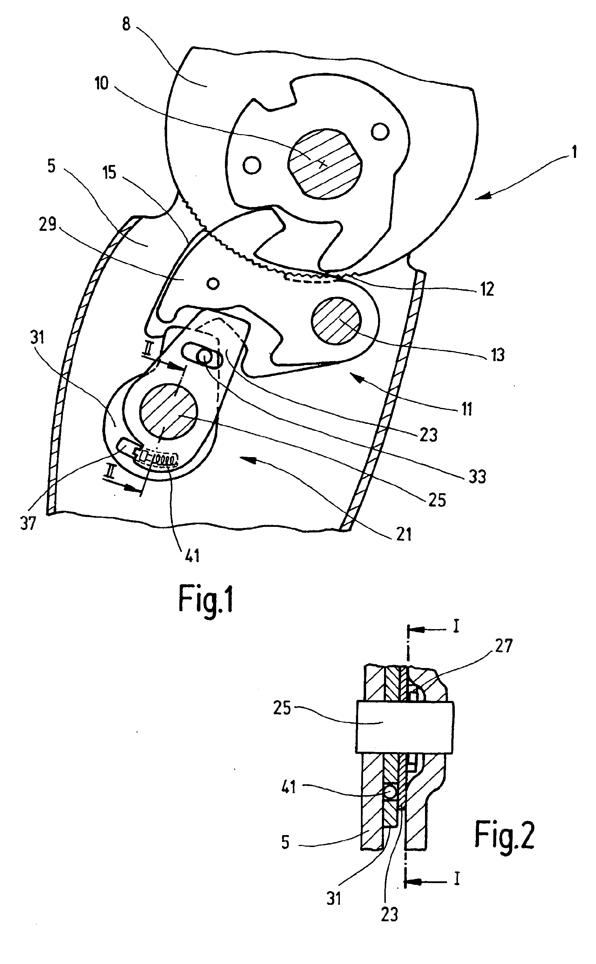

Im folgenden ist die Erfindung anhand eines in der Zeichnung dargestellten Ausführungsbeispiels näher erläutert. Es zeigen
- Fig. 1: eine teilweise geschnitten dargestellte Teilansicht eines Rastbeschlags mit erfindungsgemäßer Sicherungsvorrichtung,
- Fig. 2: einen Schnitt entlang der Linie II-II in Fig. 1,

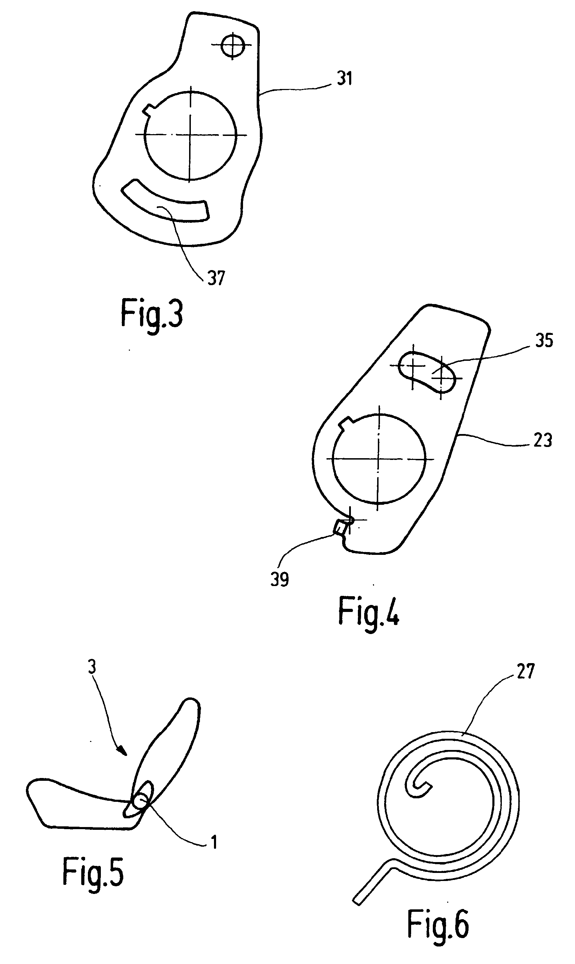

- Fig. 3: eine Ansicht eines Fangelements der Sicherungsvorrichtung,
- Fig. 4: eine Ansicht eines Spannexzenters der Sicherungsvorrichtung,
- Fig. 5: eine schematische Darstellung eines Fahrzeugsitzes, und
- Fig. 6: eine Ansicht einer Spiralfeder der Sicherungsvorrichtung.

Ein Rastbeschlag 1 für einen Fahrzeugsitz 3 ist mit einem sitzteilstukturfesten Beschlagunterteil 5, welches zwei im wesentlichen flache, zusammengefügte, einen Bauraum des Beschlagunterteils 5 definierende Platten aufweist, sowie mit einem flachen, lehnenstrukturfesten Beschlagoberteil 8 versehen, welches wenigstens teilweise innerhalb des Bauraums des Beschlagunterteils 5 angeordnet und relativ zum Beschlagunterteil 5 um einen Lehnenbolzen 10 drehbar ist. Der Fahrzeugsitz 3 weist zwei spiegelbildliche Rastbeschläge 1 auf, welche die Rückenlehne des Fahrzeugsitzes 3 neigungseinstellbar und schwenkbar tragen. Für eine Verriegelungsvorrichtung 11 ist am Beschlagoberteil 8 im lehnenabgewandten Bereich ein um den Lehnenbolzen 10 herum gekrümmter Zahnkranz 12 und am Beschlagunterteil 5 eine innerhalb des Bauraums angeordnete, auf einem Klinkenlagerbolzen 13 schwenkbar gelagerte Sperrklinke 15 vorgesehen, wobei die Sperrklinke 15 als ein erstes Verriegelungselement und der Zahnkranz 12 als ein zweites Verriegelungselement je nach Relativstellung der Beschlagteile 5 und 8 unter Zahneingriff zusammenwirken.

Eine Sicherungsvorrichtung 21 für diese Verriegelungsvorrichtung 11 weist als ein erstes Sicherungselement einen im wesentlichen flachen Spannexzenter 23 auf, welcher auf einem Lagerbolzen 25 des Beschlagunterteils 5 auf der vom Zahnkranz 12 abgewandten Seite der Sperrklinke 15 schwenkbar gelagert ist. Im verriegelten Zustand des Rastbeschlags 1 drückt eine vorgespannte Spiralfeder 27 den Spannexzenter 23 gegen ein mit der Sperrklinke 15 drehfest verbundenes Steuerstück 29, so daß die Sperrklinke 15 mit ihren Zähnen in den Zahnkranz 12 gedrückt wird. Die Spiralfeder 27 weist einen quadratischen Querschnitt auf.

Die Sicherungsvorrichtung 21 weist ferner als zweites Sicherungselement ein im wesentlichen flaches Fangelement 31 auf, welches ebenfalls schwenkbar auf dem Lagerbolzen 25 gelagert ist. Das Fangelement 31 ist normalerweise in geringem Abstand zur Sperrklinke 15 angeordnet. Im Crashfall wirkt ein Drehmoment auf das Beschlagoberteil 8, welches auf die Sperrklinke 15 öffnend wirkt und versucht, den Spannexzenter 23 zurückzudrücken. Die Sperrklinke 15 stützt sich jedoch nach einer minimalen Schwenkbewegung so auf dem Fangelement 31 ab, daß der Zahneingriff zwischen der Sperrklinke 15 und dem Zahnkranz 12 erhalten bleibt.

Der Spannexzenter 23 und das Fangelement 31 sind über eine Schlitz-Zapfen-Führung, bestehend aus einem Bolzen 33 am Fangelement 31 und einer um den Lagerbolzen 25 gekrümmten, im Spannexzenter 23 ausgebildeten Kulisse 35, miteinander gekoppelt, wobei die Schlitz-Zapfen-Führung einen toten Gang bewirkt. Erfindungsgemäß ist im Fangelement 31 auf der von der Sperrklinke 15 und der Schlitz-Zapfen-Führung abgewandten Seite eine längliche, um den Lagerbolzen 25 gekrümmte Aufnahme 37 vorgesehen, während am Spannexzenter 23 eine Abwinkelung 39 vorgesehen ist, welche in die Aufnahme 37 greift.

Eine als Schraubenfeder ausgebildete Schließfeder 41 ist innerhalb der Aufnahme 37 zwischen der Abwinkelung 39 und der Wandung an demjenigen Ende der Aufnahme 37 abgestützt, welches in Schließrichtung des Spannexzenters 23 voreilend ist. Der Durchmesser der Schließfeder 41 entspricht näherungsweise der Materialstärke des Fangelementes 31 in der durch den Lehnenbolzen 10 definierten y-Richtung, so daß die Schließfeder 41 in allen Richtungen vollständig innerhalb der Aufnahme 37 angeordnet ist, d.h. in das Fangelement 31 eingebettet ist. Aufgrund einer Druck-Vorspannung der Schließfeder 41 wird das Fangelement 31 gegenüber dem Spannexzenter 23 in Schließrichtung gespannt, in der Regel bis das Fangelement 31 an einem radial vorspringenden Anschlag der Sperrklinke 15 anliegt oder spätestens bis der Bolzen 33 an das Ende der Kulisse 35 gelangt.

Zum Entriegeln des Rastbeschlags 1 muß zunächst die Sicherungsvorrichtung 21 gelöst werden. Hierzu wird über den Bolzen 33 das Fangelement 31 entgegen der Federbelastungen zurückgeschwenkt, wobei die Schließfeder 41 weiter zusammengedrückt wird. Wenn die dadurch aufgebaute Federkraft größer als diejenige der Spiralfeder 27 ist oder spätestens wenn der Bolzen 33 an das Ende der Kulisse 35 gelangt, wird der Spannexzenter 23 mitgezogen, d.h. entgegen seiner Federbelastung geöffnet. Sobald das Fangelement 31 in Anlage an einen radial vorspringenden Mitnehmerbereich der Sperrklinke 15 gelangt, nimmt das Fangelement 31 die Sperrklinke 15 mit, so daß diese geöffnet wird und der Rastbeschlag 1 entriegelt ist.

### Bezugszeichenliste

- 1: Rastbeschlag, Einsteller
- 3: Fahrzeugsitz
- 5: Beschlagunterteil
- 8: Beschlagoberteil
- 10: Lehnenbolzen
- 11: Verriegelungsvorrichtung
- 12: Zahnkranz, zweites Verriegelungselement
- 13: Klinkenlagerbolzen
- 15: Sperrklinke, erstes Verriegelungselement
- 21: Sicherungsvorrichtung
- 23: Spannexzenter, Spannelement
- 25: Lagerbolzen
- 27: Spiralfeder, Federmittel
- 29: Steuerstück
- 31: Fangelement
- 33: Bolzen
- 35: Kulisse
- 37: Aufnahme
- 39: Abwinkelung
- 41: Schließfeder, Federmittel

## Patentansprüche

1. Verriegelungsvorrichtung für einen Fahrzeugsitz, insbesondere in einem Einsteller eines Kraftfahrzeugsitzes, mit zwei relativ zueinander beweglichen, in Eingriff bringbaren Verriegelungselementen (12, 15), durch welche zwei relativ zueinander bewegliche Bauteile (5, 8) des Fahrzeugsitzes (3) miteinander verriegelbar sind, und mit einer Sicherungsvorrichtung (21) für die verriegelten Verriegelungselemente (12, 15), welche als Sicherungselemente ein schwenkbar gelagertes, durch ein Federmittel (41) beaufschlagtes Fangelement (31) zum Abstützen eines ersten Verriegelungselementes (15) im Crashfall und ein schwenkbar gelagertes, auf das erste Verriegelungselement (15) einwirkendes, durch ein weiteres Federmittel (27) beaufschlagtes Spannelement (23) zum Verspannen des ersten Verriegelungselementes (15) gegenüber dem zweiten Verriegelungselement (12) aufweist, **dadurch gekennzeichnet, daß** in wenigstens einem ersten der Sicherungselemente (31) eine Aufnahme (37) - vorgesehen ist, welche ein erstes der beiden Federmittel (41) vollständig aufnimmt.

2. Verriegelungsvorrichtung nach Anspruch 1, **dadurch gekennzeichnet, daß** die beiden Sicherungselemente (23, 31) im wesentlichen flach ausgebildet und nebeneinander auf dem gleichen Lagerbolzen (25) gelagert sind.

3. Verriegelungsvorrichtung nach Anspruch 2, **dadurch gekennzeichnet, daß** die Aufnahme (37) bezüglich des Lagerbolzens (25) auf der vom ersten Verriegelungselement (15) abgewandten Seite des Sicherungselementes (31) vorgesehen ist.

4. Verriegelungsvorrichtung nach einem der Ansprüche 1 bis 3, **dadurch gekennzeichnet, daß** das erste Federmittel (41) zwischen den beiden Sicherungselementen (23, 31) wirksam ist.

5. Verriegelungsvorrichtung nach einem der Ansprüche 1 bis 4, **dadurch gekennzeichnet, daß** das erste Federmittel (41) an einem Ende an der Wandung der Aufnahme (37) und am anderen Ende an einer in die Aufnahme (37) greifenden Abwinkelung (39) des zweiten Sicherungselementes (23) abgestützt ist.

6. Verriegelungsvorrichtung nach einem der Ansprüche 1 bis 5, **dadurch gekennzeichnet, daß** das erste Federmittel (41) als Schraubenfeder ausgebildet ist, welche auf Druck beansprucht wird.

7. Verriegelungsvorrichtung nach einem der Ansprüche 1 bis 6, **dadurch gekennzeichnet, daß** die beiden Sicherungselemente (23, 31) über eine Schlitz-Zapfen-Führung (33, 35) miteinander gekoppelt sind.

8. Verriegelungsvorrichtung nach einem der Ansprüche 1 bis 7, **dadurch gekennzeichnet, daß** das Fangelement (31) die Aufnahme (37) aufweist.

9. Verriegelungsvorrichtung nach einem der Ansprüche 1 bis 8, **dadurch gekennzeichnet, daß** das zweite, weitere Federmittel (27) als Spiralfeder mit quadratischem Querschnitt ausgebildet ist.

10. Verriegelungsvorrichtung nach einem der Ansprüche 1 bis 9, **dadurch gekennzeichnet, daß** die Verriegelungsvorrichtung (11) einen Beschlag (1) zur Neigungseinstellung einer Rückenlehne des Fahrzeugsitzes (1) verriegelt.

11. Fahrzeugsitz mit einem Einsteller (1) zur Relativbewegung und Verriegelung zweier Baugruppen des Fahrzeugsitzes (3), **gekennzeichnet durch** eine Verriegelungsvorrichtung (1) nach einem der Ansprüche 1 bis 10.

## Claims

1. Locking device for a vehicle seat, in particular in an adjuster for a motor vehicle seat, having two locking elements (12, 15) which can be moved relative to each other and which can be brought into engagement with each other, and by means of which two components (5, 8) of the vehicle seat (3) that can be moved relative to each other can be locked together, and having, for the locked locking elements (12, 15), a securing device (21) which has, as securing elements, a pivotably supported catch element (31) which is acted upon by a resilient means (41) for supporting a first locking element (15) in the event of a crash and a pivotably supported clamping element (23) which acts on the first locking element (15) and which is acted upon by a further resilient means (27) for clamping the first locking element (15) relative to the second locking element (12), **characterised in that**, in at least a first of the securing elements (31), there is provided a receiving element (37) which completely receives a first of the two resilient means (41).

2. Locking device according to claim 1, **characterised in that** the two securing elements (23, 31) are constructed in a substantially planar manner and are arranged beside each other on the same bearing pin (25).

3. Locking device according to claim 2, **characterised in that** the receiving element (37) is provided, relative to the bearing pin (25), at the side of the securing element (31) facing away from the first locking element (15).

4. Locking device according to any one of claims 1 to 3, **characterised in that** the first resilient means (41) is effective between the two securing elements (23, 31).

5. Locking device according to any one of claims 1 to 4, **characterised in that** the first resilient means (41) is supported at one end on the wall of the receiving element (37) and at the other end on an angular portion (39) of the second securing element (23), which angular portion (39) engages in the receiving element (37).

6. Locking device according to any one of claims 1 to 5, **characterised in that** the first resilient means (41) is in the form of a coil spring which is loaded in response to pressure.

7. Locking device according to any one of claims 1 to 6, **characterised in that** the two securing elements (23, 31) are coupled together by means of a slot/pin type guide (33, 35).

8. Locking device according to any one of claims 1 to 7, **characterised in that** the catch element (31) has the receiving element (37).

9. Locking device according to any one of claims 1 to 8, **characterised in that** the second additional resilient means (27) is in the form of a helical spring having a square cross-section.

10. Locking device according to any one of claims 1 to 9, **characterised in that** the locking device (11) locks a fitting (1) for adjusting the inclination of a backrest of the vehicle seat (1).

11. Vehicle seat having an adjuster (1) for relative movement and locking of two assemblies of the vehicle seat (3), **characterised by** a locking device (1) according to any one of claims 1 to 10.

## Revendications

1. Dispositif de verrouillage pour un siège de véhicule, en particulier dans un dispositif de réglage d'un siège de véhicule automobile, avec deux éléments de verrouillage (12, 15) aptes à être mise en prise, déplaçables l'un par rapport à l'autre, par lesquels deux composants (5, 8) du siège de véhicule (3) déplaçables l'un par rapport à l'autre sont aptes à être verrouillés l'un avec l'autre, et avec un dispositif de sécurité (21) pour les éléments de verrouillage (12, 15) verrouillés, lequel présente comme élément de sécurité un élément d'arrêt (31) sollicité par un moyen de ressort (41), monté apte à pivoter pour l'appui d'un premier élément de verrouillage (15) en cas d'accident et un élément de serrage (23) sollicité par un autre moyen de ressort (27), agissant sur le premier élément de verrouillage (15), monté apte à pivoter, pour le serrage du premier élément de verrouillage (15) vis-à-vis du deuxième de verrouillage (12), **caractérisé par le fait que**, dans au moins un premier des éléments de sécurité (31) est prévu un logement (37), lequel reçoit entièrement un premier des deux moyens de ressort (41).

2. Dispositif de verrouillage selon la revendication 1, **caractérisé par le fait que** les deux éléments de sécurité (23, 31) sont réalisés sensiblement plats et sont montés l'un à côté de l'autre sur le même axe de palier (25).

3. Dispositif de verrouillage selon la revendication 2, **caractérisé par le fait que** le logement (37) est prévu sur le côté de l'élément de sécurité (31) tourné à l'opposé du premier élément de verrouillage (15) par rapport à l'axe de palier (25).

4. Dispositif de verrouillage selon l'une des revendications 1 à 3, **caractérisé par le fait que** le premier moyen de ressort (41) est actif entre les deux éléments de sécurité (23, 31).

5. Dispositif de verrouillage selon l'une des revendications 1 à 4, **caractérisé par le fait que** le premier moyen de ressort (41) est supporté à une extrémité sur la paroi du logement (37) et à l'autre extrémité sur un pli (39) en prise dans le logement (37) du deuxième élément de sécurité (23).

6. Dispositif de verrouillage selon l'une des revendications 1 à 5, **caractérisé par le fait que** le premier moyen de ressort (41) est réalisé sous la forme d'un ressort cylindrique, lequel travaille à la compression.

7. Dispositif de verrouillage selon l'une des revendications 1 à 6, **caractérisé par le fait que** les deux éléments de sécurité (23, 31) sont couplés l'un à l'autre par un guide à tenon et mortaise (33, 35).

8. Dispositif de verrouillage selon l'une des revendications 1 à 7, **caractérisé par le fait que** l'élément d'arrêt (31) présente le logement (37).

9. Dispositif de verrouillage selon l'une des revendications 1 à 8, **caractérisé par le fait que** l'autre, deuxième, moyen de ressort (27) est réalisé sous la forme d'un ressort en spirale avec une section carrée.

10. Dispositif de verrouillage selon l'une des revendications 1 à 9, **caractérisé par le fait que** le dispositif de verrouillage (11) verrouille une armature (1) par rapport à une position d'inclinaison d'une dossier du siège de véhicule (1).

11. Siège de véhicule présentant un dispositif de réglage (1) pour le mouvement relatif et le verrouillage de deux sous-ensembles du siège de véhicule (3), **caractérisé par** un dispositif de verrouillage (1) tel que défini à l'une des revendications 1 à 10.
